# EUROPEAN PATENT APPLICATION

(11) **EP 4 391 112 A1**
(43) Date of publication of application: **26.06.2024**
(21) Application number: 22899760.7
(22) Date of filing: 25.03.2022
(51) Int. Cl.: H01M 4/48, H01M 4/58, H01M 4/62

(54) **COMPOSITE COATING METHOD FOR HIGHLY-COMPACTED NICKELIC LAYERED POSITIVE ELECTRODE MATERIAL OF SOLID-STATE BATTERY**

(30) Priority: 30.11.2021 CN 202111438206
(71) Applicant: Tianjin B&M Science And Technology Co., Ltd., Tianjin 300384 (CN)
(72) Inventor: LI, Honglei, Tianjin 300384 (CN); LV, Fei, Tianjin 300384 (CN); JI, Changyin, Tianjin 300384 (CN); TANG, Miao, Tianjin 300384 (CN); CHEN, Zhiyu, Tianjin 300384 (CN); XU, Ning, Tianjin 300384 (CN); WU, Mengtao, Tianjin 300384 (CN)
(74) Representative: Ström & Gulliksson AB
(86) International application number: PCT/CN2022/082976
(87) International publication number: WO 2023/097937

(57) **Abstract**

Disclosed is a composite coating method for a highly-compacted nickelic layered positive electrode material of a solid-state battery. By using an organic solvent mixed solution as a dispersion medium, full contact between a phosphate, a vanadium oxide, and the surface of a nickelic ternary material is achieved; by reacting LiOH and Li₂CO₃ on the material surface with the phosphate, residual lithium is removed and uniform coating of Li₃PO₄ is achieved; in addition, coating of a vanadium compound is completed on the material surface by means of adsorption and deposition; the used organic solvent mixed solution system facilitates uniform dispersion of a nickelic layered material, and achieves synchronous completion of water washing and coating; the vanadium oxide having electrochemical activity can provide sites for deintercalation and intercalation of Li ; the electrochemical properties of the nickelic layered material are improved; the material as an intermediate buffer layer can enable a highly-compacted nickelic layered positive electrode to be compatible with a solid electrolyte, inhibits side reactions between the electrode material and the solid electrolyte, and obtains a stable electrode and electrolyte interface.

## Description

This application claims priority to Chinese Patent Application No. 202111438206.9, titled "COMPOSITE COATING METHOD FOR HIGHLY-COMPACTED NICKELIC LAYERED POSITIVE ELECTRODE MATERIAL OF SOLID-STATE BATTERY", filed on November 30, 2021 with the China National Intellectual Property Administration, which is incorporated herein by reference in its entirety.

### FIELD

The present disclosure relates to the lithium battery material technology and in particular to a composite coating method for highly compacted high-nickel layered cathode material for solid-state battery.

### BACKGROUND

As an efficient energy conversion and storage device, lithium-ion batteries have been widely used in various portable electronic devices, new energy vehicles and large energy storage power stations. However, the rapid development of electric vehicles in recent years has put forward high requirements on the energy density, life and safety performance of batteries. Compared with traditional liquid electrolytes, solid electrolytes have advantages of high thermal stability, non-flammability, no leakage, and no volatilization, and have a high thermal runaway initiation temperature, which is conducive to improving the safety and stability of batteries. Therefore, solid-state lithium-ion batteries in which high specific energy cathode materials match with solid-state electrolytes are expected to have both high energy density and high safety performance.

High-nickel layered materials have attracted extensive attention from researchers due to their high specific capacity and good cycle performance. However, as the nickel content increases, the rate performance, thermal stability, and safety of the material deteriorate. During storage, the high-nickel layered material is easy to react with H₂O and CO₂ in the air to form LiOH and Li₂CO₃ on the surface, and the formation of residual alkali not only makes the slurry easy to gel during the electrode fabrication process, but also leads to an increase in gas production during the electrochemical reaction process, which brings safety problems. On the other hand, as a key component of an all-solid-state battery, the solid-state electrolyte plays a dual role of ion conduction and a separator between the cathode and anode in the battery. The inorganic sulfide solid-state electrolytes have a high lithium-ionic conductivity (10⁻⁴-10⁻² S/cm) comparable to liquid electrolytes and good plasticity, and are considered to be one of the most promising solid electrolytes. However, due to its poor compatibility between the electrode and the electrolyte, the electrolyte and the electrode react spontaneously when they are in contact with each other, and the high interfacial impedance caused by the solid/solid interface between the two also restricts the development of solid-state batteries.

In order to overcome the above shortcomings, it is usually necessary to simultaneously modify the high-nickel layered materials and solid electrolytes. Researchers mostly use the water washing process, and then carry out surface coating modification on high-nickel layered materials using Al₂O₃, SiO₂, ZrO₂, TiO₂, etc., so as to reduce the residual lithium content on the surface of the material and improve its cycle stability and storage performance. However, the electronic/ionic conductivity of the above-mentioned oxide-coated materials is low, which hinders the diffusion of electrons and lithium ions during the electrochemical reaction and reduces the rate performance of the material. In addition, the step-by-step process of water washing and surface coating makes the technical process too cumbersome and requires more variable control. On the other hand, in order to suppress the side reactions between electrode materials and solid electrolytes and obtain stable electrode-electrolyte interfaces, many interface modification strategies have been developed. Among them, it is feasible to use a buffer layer between the electrode and the solid-state electrolyte. Using an electronically insulating and ion-conductive buffer layer while increasing the compaction density of the cathode material can effectively reduce the interface impedance between the electrode and the electrolyte and improve the electrochemical performance of the solid-state batteries. By comprehensively considering the characteristics of high-nickel layered positive materials and solid electrolytes, we can develop new composite coating materials and optimize the preparation process, reduce the residual alkali on the surface of high-nickel layered materials, and make the materials match the solid electrolyte as an intermediate buffer layer, and improve the electrochemical performance of solid-state batteries as a whole.

The patent with a publication number CN109244416A discloses a high-nickel material coated with lithium-phosphorus oxide by reacting residual lithium on the surface of a high-nickel layered material with phosphoric acid in a liquid phase system and conducting calcining. However, this method uses phosphoric acid as a reactant, and the H+/Li+ exchange reaction in the synthesis process leads to the dissolution of Li+ and transition metal ions in the material lattice, which seriously damages the surface structure of the material. The patent with the publication number CN112194196A discloses an oxide/fluoride composite coating agent, which coats an ultra-high-nickel single crystal layered material using water as a dispersion medium. However, none of the selected composite coating layers has lithium storage properties, resulting in a part of capacity loss, and the high-nickel single crystal layered material is easy to settle in water, making it difficult to achieve uniform coating on the surface of the material.

Thus it can be seen that the conventional technology is not sufficient to simultaneously realize the reduction of residual lithium on the surface of high-nickel layered materials and the construction of an intermediate buffer layer with electronic insulation and ionic conductivity between electrodes and solid electrolytes. This is an urgent problem to be solved.

### SUMMARY

In order to overcome the above-mentioned defects of the conventional technology, the present disclosure provides a composite coating method for a highly compacted high-nickel layered cathode material for a solid-state battery. The technical problem to be solved by the present disclosure is: the conventional technology is not sufficient to simultaneously achieve the reduction of residual lithium on the surface of high-nickel layered materials and the construction of an intermediate buffer layer with electronic insulation and ionic conductivity properties between the electrode and the solid electrolyte. This is an urgent problem to be solved.

In order to achieve the above object, the present disclosure provides the following technical solution: a composite coating method for a highly compacted high-nickel layered cathode material for a solid-state battery, comprising following steps:
S1, dissolving an organic solvent and a soluble phosphate in a deionized water, and keeping stirring to prepare a mixed solution with a certain concentration;
S2, dispersing a high-nickel layered material and a vanadium compound in the above mixed solution, and stirring at room temperature to obtain a suspension, wherein the stirring is kept at a speed of 100-500 r/min for a time of 5-30 mins;
S3, performing suction filtration to the mixed solution obtained in S2, washing, and then drying in a vacuum oven at 60-180 °C for 1-5 hours to obtain a coated sample precursor;
S4, calcining the coated sample precursor in an oxygen atmosphere, and then cooling to room temperature to obtain a high-nickel layered cathode material compositely coated with a vanadium oxide with the chemical formula Li₃PO₄;
S5, grinding and mixing the high-nickel layered cathode material compositely coated with the vanadium oxide obtained in S4 with a conductive carbon black and sulfide electrolyte powders in a certain mass ratio in a glove box for 10-30 minutes to obtain a highly compacted all-solid-state battery cathode material.

As a further embodiment of the present disclosure, a general formula of the high-nickel layered cathode material is LiNiₓM₁₋ₓO₂, wherein M is one or more of Co, Mn, Al, Ti, Zr, Mg, W and Mo, and 0.6 ≤x<1.

As a further embodiment of the present disclosure, a particle size d₅₀ of secondary particles of the high-nickel layered cathode material ranges from 8 µm to 16 µm, d₁₀ ranges from 4 µm to7 µm, d₉₀ ranges from 18 µm to 22 µm, and a compacted density is greater than or equal to 3.3 g/cm³.

As a further embodiment of the present disclosure, the vanadium oxide in a composite coating layer comprises one or more of V₂O₅, VO₂, V₆O₁₃, LiVO₂, LiV₂O₅, LiV₃O₈, and a mass of the vanadium oxide ranges from 0.5 wt.% to 5wt.% of a mass of the high-nickel layered cathode material.

As a further embodiment of the present disclosure, the organic solvent comprises any one or more of ethanol, ethylene glycol, polyethylene glycol, n-propanol and isopropanol, and the soluble phosphate comprises any one or more of NaH₂PO₄, NH₄H₂PO₄, (NH₄)₂HPO₄ and (NH₄)₃PO₄.

As a further embodiment of the present disclosure, a concentration of phosphate radical in the mixed solution in S1 ranges from 0.05 mol/L to 0.3 mol/L, and a concentration of organic solvent ranges from 5 wt.% to 30 wt.%.

As a further embodiment of the present disclosure, the vanadium compound in S2 comprises at least one of V₂O₅, VO₂, NH₄VO₃ and NaVO₃.

As a further embodiment of the present disclosure, a mass ratio of the high-nickel cathode material to the mixed solution in S2 ranges from 0.5 to 2:1.

As a further embodiment of the present disclosure, in S4, the calcination in an oxygen atmosphere is carried out in a temperature ranging from 400 °C to 700 °C for a time ranging from 3 hours to 8 hours at a heating rate ranging from 1 °C/min to 5 °C/min.

The beneficial effects of the present disclosure are as follows:
1. The present disclosure realizes sufficient contact between phosphate, vanadium oxide and the high-nickel ternary material in the surface by using a mixed solution of organic solvent as a dispersion medium, and removes residual lithium by reacting LiOH and Li₂CO₃ on the surface of the material with phosphate to realize uniform coating of Li₃PO₄. At the same time, the vanadium compound is coated by means of adsorption and deposition on the surface of the material. Compared with the existing washing and coating process of high-nickel layered materials, the mixed solution system of organic solvent adopted in the present disclosure helps to uniformly disperse the high-nickel layered material, and realizes the simultaneous completion of water washing and coating. Li₃PO₄ in the composite coating layer, as a fast ion conductor, is conducive to the rapid diffusion of lithium ions. Electrochemically active vanadium oxides can provide sites for Li⁺ extraction and insertion to improve the electrochemical performance of high-nickel layered materials. The composite coating layer has the characteristics of electronic insulation and ionic conductivity, and as an intermediate buffer layer, it can make the highly compacted high-nickel layered cathode compatible with the solid-state electrolyte, to suppress the side reaction between the electrode material and the solid electrolyte, and obtain a stable electrode-electrolyte interface.
2. The present disclosure simplifies the washing and coating process in the preparation process of the high-nickel layered cathode material, reduces the residual lithium on the surface of the high-nickel layered material. At the same time, the surface of the obtained highly compacted high-nickel layered cathode material has electronic insulation and ionic conductivity buffer layer, which can be compatible with the solid-state electrolyte, thereby improving the energy density, cycle life and rate performance of the solid-state battery. The method is characterized by simplicity and low cost, and has broad application prospects.

### BRIEF DESCRIPTION OF THE DRAWINGS

Figure 1 is an SEM image of the high-nickel layered cathode material with Li₃PO₄/vanadium oxide composite coating layer according to example 1;
Figure 2 is an SEM image of the high-nickel layered cathode material with Li₃PO₄/vanadium oxide composite coating layer according to example 2;
Figure 3 is an SEM image of the high-nickel layered cathode material with Li₃PO₄/vanadium oxide composite coating layer according to example 3;
Figure 4 is an SEM image of the high-nickel layered cathode material with Li₃PO₄/vanadium oxide composite coating layer according to example 4;

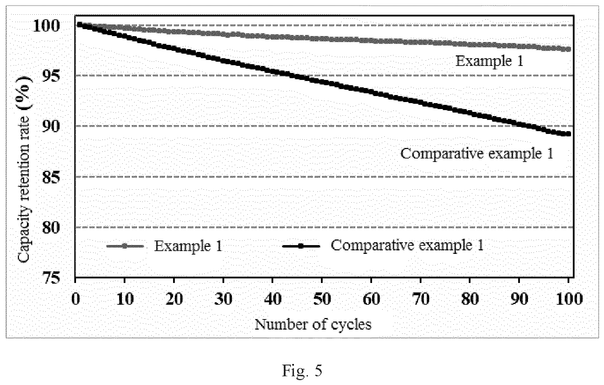

Figure 5 is a cycle performance diagram of samples in example 1 and comparative example 1.

### DETAILED DESCRIPTION OF EMBODIMENTS

The technical solutions in the examples of the present disclosure will be clearly and completely described below. Obviously, the described examples are only some of the examples of the present disclosure, but not all of them. Based on the examples of the present disclosure, all other examples obtained by persons of ordinary skill in the art without making creative efforts belong to the protection scope of the present disclosure.

### Example 1:

S1. 475 g of deionized water, 25 g of ethanol and 6 g of sodium dihydrogen phosphate were added sequentially into a 1 L beaker, dissolved thoroughly and mixed well;
S2. 500 g of high-nickel positive material LiNi_{0.8}Co_{0.1}Mn_{0.1}O₂ (d₁₀=4.5 µm, d₅₀=10.5 µm, d₉₀=19 µm) and 5 g of vanadium pentoxide were added into the above mixed solution at a stirring speed of 300 r/min for a stirring time of 30 mins;
S3. The mixed solution was poured into a Buchner funnel, filtered through a vacuum pump, and then rinsed several times with absolute ethanol, and dried in a vacuum drying oven preheated at 120 °C for 4 hours to obtain a coated sample precursor;
S4. The coated sample precursor was sieved through a 300-mesh sample sieve, then placed in a sagger, and calcined in a box-type furnace under an oxygen atmosphere at 600 °C for 4 hours with the rate of temperature increase set at 1 °C/min. The obtained material was slowly cooled in the box-type furnace, and then sieved, to obtain a high-nickel layered cathode material with a uniform composite coating layer of Li₃PO₄/vanadium oxide.

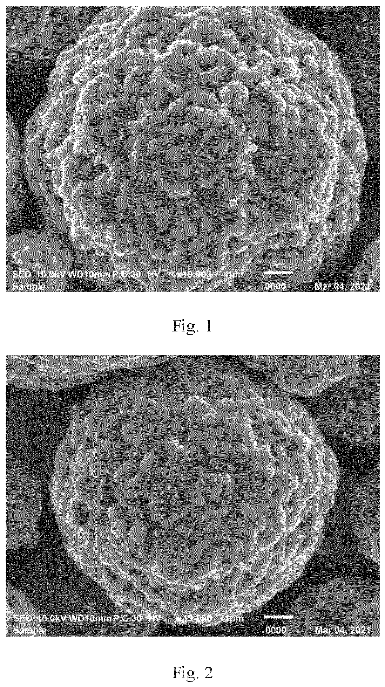

Figure 1 shows the SEM image of the above-mentioned high-nickel layered cathode material with a composite coating layer of Li₃PO₄/vanadium oxide on the surface. It can be seen that the composite coating layer on the surface is uniform and dense.

### Example 2:

S1. 450 g of deionized water, 50 g of ethylene glycol and 5.75 g of ammonium dihydrogen phosphate were added sequentially into a 1 L beaker, dissolved thoroughly and mixed well;
S2. 500 g of high-nickel positive material LiNi_{0.83}Co_{0.12}Mn_{0.07}O₂ (d₁₀=5 µm, d₅₀=12 µm, d₉₀=20 µm) and 5 g of vanadium dioxide were added into the above mixed solution at a stirring speed of 300 r/min for a stirring time of 20 mins;
S3. The mixed solution was poured into a Buchner funnel, filtered through a vacuum pump, and then rinsed several times with absolute ethanol, and dried in a vacuum drying oven preheated at 150 °C for 3 hours to obtain a coated sample precursor;
S4. The coated sample precursor was sieved through a 300-mesh sample sieve, then placed in a sagger, and calcined in a box-type furnace under an oxygen atmosphere at 500 °C for 6 hours with the rate of temperature increase set at 2 °C/min. The obtained material was slowly cooled in the box-type furnace, and then sieved, to obtain a high-nickel layered positive material with a uniform composite coating layer of Li₃PO₄/vanadium oxide .

Figure 2 shows the SEM image of the above-mentioned high-nickel layered cathode material with a composite coating layer of Li₃PO₄/vanadium oxide on the surface. It can be seen that the composite coating layer on the surface is uniform and dense.

### Example 3:

S1. 400g of deionized water, 100g of polyethylene glycol (PEG400) and 12.80g of diammonium hydrogen phosphate were added sequentially into a 1L beaker, dissolved thoroughly and mixed well;
S2. 500g of high-nickel positive material LiNi_{0.90}Co_{0.05}Mn_{0.05}O₂ (d₁₀=6 µm, d₅₀=14 µm, d₉₀=21 µm) and 6.43 g of ammonium metavanadate were added into the above mixed solution at a stirring speed of 300 r/min for a stirring time of 10 mins;
S3. The mixed solution was poured into a Buchner funnel, filtered through a vacuum pump, and then rinsed several times with absolute ethanol, and dried in a vacuum drying oven preheated at 180 °C for 2 hours to obtain a coated sample precursor;
S4. The coated sample precursor was sieved through a 300-mesh sample sieve, then placed in a sagger, and calcined in a box-type furnace under an oxygen atmosphere at 400 °C for 8 hours with the rate of temperature increase set at 3 °C/min. The obtained material was slowly cooled in the box-type furnace, and then sieved, to obtain a high-nickel layered positive material with a uniform composite coating layer of Li₃PO₄/vanadium oxide.

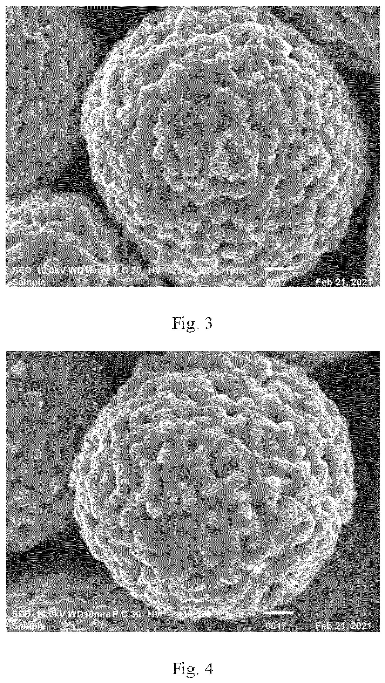

Figure 3 shows the SEM image of the above-mentioned high-nickel layered cathode material with a composite coating layer of Li₃PO₄/vanadium oxide on the surface. It can be seen that the composite coating layer on the surface is uniform and dense.

### Example 4:

S1. 450 g of deionized water, 50 g of isopropanol and 14.90 g of ammonium phosphate were added sequentially into a 1 L beaker, dissolved thoroughly and mixed well;
S2. 500 g of high-nickel positive material LiNi_{0.96}Co_{0.02}Mn_{0.02}O₂ (d₁₀=7 µm, d₅₀=15 µm, d₉₀=22 µm) and 6.43 g of ammonium metavanadate were added into the above mixed solution at a stirring speed of 300 r/min for a stirring time of 20 mins;
S3. The mixed solution was poured into a Buchner funnel, filtered through a vacuum pump, and then rinsed several times with absolute ethanol, and dried in a vacuum drying oven preheated at 180 °C for 2 hours to obtain a coated sample precursor;
S4. The coated sample precursor was sieved through a 300-mesh sample sieve, then placed in a sagger, and calcined in a box-type furnace under an oxygen atmosphere at 600 °C for 5 hours with the rate of temperature increase set at 3 °C/min. The obtained material was slowly cooled in the box-type furnace, and then sieved, to obtain a high-nickel layered positive material with a uniform composite coating layer of Li₃PO₄/vanadium oxide.

Figure 4 shows the SEM image of the above-mentioned high-nickel layered cathode material with a composite coating layer of Li₃PO₄/vanadium oxide on the surface. It can be seen that the composite coating layer on the surface is uniform and dense.

### Comparative example 1:

The comparative example adopts the existing material coating method for improving the electrochemical performance of high-nickel ternary materials. The steps are as follows:
S1. Residual lithium content on the surface of the high-nickel ternary material LiNi_{0.8}Co_{0.1}Mn_{0.1}O₂ was measured. 500 g of the high-nickel ternary material was weighed, and dispersed in 500 g of absolute ethanol under magnetic stirring to form a suspension;
S2. Phosphoric acid required to theoretically completely react the residual lithium on the surface of 500 g of the high-nickel ternary material was weighed, that is, the molar ratio of phosphate radical and lithium ion was 0.33:1. The phosphoric acid was dissolved in 150 g of dehydrated alcohol to form a phosphoric acid ethanol solution. The solution was added dropwise to the above suspension, and heated and evaporated to dryness at 70 °C to preliminarily obtain a coating layer on the surface of the high-nickel ternary material;
S3. The above-mentioned high-nickel ternary material with the coating layer was dried in an oven at 90 °C for 0.5 h, then calcined under an oxygen atmosphere at 650 °C for 5 hours to obtain a high-nickel ternary material coated with lithium phosphorus oxide.

### Experiment:

The electrochemical performance test of the all-solid-state battery of the materials in the above-mentioned examples and the comparative example adopts the following methods:
CR2032 button battery was used to test a cycle performance;
three materials of cathode material, conductive carbon SP, and Li_{3.25}Ge_{0.25}P_{0.75}S₄ electrolyte were weighed according to a mass ratio of 80:5:15, stirred for 2 hours and mixed evenly;
a certain mass of Li_{3.25}Ge_{0.25}P_{0.75}S₄ electrolyte powder was weighed and placed in an insulating sleeve, and pressed under a pressure of 150MPa to form an electrolyte layer, and then one side of the prepared composite positive electrolyte layer was further pressed under a pressure of 150MPa; Li-In alloy was used as the anode; the cathode and anode were placed between two stainless steel sheet current collectors to assemble a battery;
all the above operations were carried out in an argon glove box.

Testing atmosphere: water pressure is less than or equal to 0.1 ppm, oxygen partial pressure is less than or equal to 0.1 ppm;

The charge and discharge test was carried out at room temperature at a voltage of 2.8-4.25V and a current density of 60mA/g (0.3C rate) for 100 cycles of charge and discharge.

The collected data of charge specific capacity in the first week, discharge specific capacity in the first week, coulombic efficiency in the first week and capacity retention rate after 100 weeks are as follows:

| | Charge specific capacity in the first week (mAh/g) | Discharge specific capacity in the first week (mAh/g) | Coulombic efficiency in the first week (%) | Capacity retention rate after 100 weeks (%) |
|---|---|---|---|---|
| Example 1 | 198 | 179 | 90.4 | 97.6 |
| Example 2 | 202 | 183 | 90.6 | 97.5 |
| Example 3 | 210 | 192 | 91.4 | 92.5 |
| Example 4 | 221 | 199 | 90.0 | 80.3 |
| Comparative example 1 | 195 | 171 | 87.7 | 89.2 |

In summary, the solid-state battery assembled with the improved high-nickel layered cathode material compositely coated with Li₃PO₄/vanadium oxide compound in the present disclosure has been electrochemically tested. The coulombic efficiency in the first week is higher than 90%, which is at least 2 percentage points higher than the cathode material with the same nickel content prepared by the conventional technology, and the discharge specific capacity is 7mAh/g higher than the conventional technology. The prepared LiNi_{0.8}Co_{0.1}Mn_{0.1}O₂ material compositely coated with Li₃PO₄/vanadium oxide has a capacity retention rate of up to 97.6% after 100 weeks, which is at least 8 percentage points higher than the conventional technology. It can be seen that the high-nickel layered cathode material improved by the method of the present disclosure has higher reversible capacity and cycle stability in the solid-state battery system, and obviously improves the electrochemical performance of the solid-state battery based on the high-nickel layered cathode material. It is pointed out that this example can also be used in the research on the modification of high-nickel layered cathode materials in lithium-ion battery systems.

The last few points that should be noted that although the present disclosure has been described in detail with general explanation and specific examples above, on the basis of the present disclosure, above each example is only to illustrate technical solutions of the present disclosure, but not to limit it. Although the present disclosure has been described in detail with reference to the foregoing examples, those skilled in the art should understand that they can still modify the technical solutions described in the foregoing examples, or equivalently replace some of the technical features or all of them. These modifications or replacements do not make the essence of the corresponding technical solutions depart from the scope of the technical solutions of the examples of the present disclosure.

## Claims

1. A composite coating method for highly compacted high-nickel layered cathode material for solid-state battery, comprising:
S1, dissolving an organic solvent and a soluble phosphate in a deionized water, and keeping stirring to prepare a mixed solution with a certain concentration;
S2, dispersing a high-nickel layered material and a vanadium compound into the mixed solution, and stirring at room temperature to obtain a suspension, wherein the stirring is kept at a speed of 100-500r/min for a time of 5-30min;
S3, performing suction filtration to the mixed solution obtained in S2, washing, and then drying in a vacuum oven at 60-180°C for 1-5 hours to obtain a coated sample precursor;
S4, calcining the coated sample precursor in an oxygen atmosphere, and then cooling to room temperature to obtain a high-nickel layered cathode material compositely coated with a vanadium oxide with a chemical formula of Li₃PO₄;
S5, grinding and mixing the high-nickel layered cathode material compositely coated with the vanadium oxide obtained in S4 with a conductive carbon black and sulfide electrolyte powders in a certain mass ratio in a glove box for 10-30 minutes to obtain a highly compacted all-solid-state battery cathode material.

2. The composite coating method for highly compacted high-nickel layered cathode material for solid-state battery according to claim 1, wherein a general formula of the high-nickel layered cathode material is LiNiₓM₁₋ₓO₂, and M is one or more of Co, Mn, Al, Ti, Zr, Mg, W and Mo, and 0.6 ≤x<1.

3. The composite coating method for highly compacted high-nickel layered cathode material for solid-state battery according to claim 1, wherein a particle size d₅₀ of secondary particles of the high-nickel layered cathode material ranges from 8 µm to 16 µm, and d₁₀ ranges from 4 µm to 7 µm, d₉₀ ranges from 18 µm to 22 µm, and a compacted density is greater than or equal to 3.3 g/cm³.

4. The composite coating method for highly compacted high-nickel layered cathode material for solid-state battery according to claim 1, wherein the vanadium oxide in a composite coating layer comprises one or more of V₂O₅, VO₂, V₆O₁₃, LiVO₂, LiV₂O₅, LiV₃O₈, and a mass of the vanadium oxide ranges from 0.5 wt.% to 5wt.% of a mass of the high-nickel layered cathode material.

5. The composite coating method for highly compacted high-nickel layered cathode material for solid-state battery according to claim 1, wherein the organic solvent comprises any one or more of ethanol, ethylene glycol, polyethylene glycol, n-propanol and isopropanol, and the soluble phosphate comprises any one or more of NaH₂PO₄, NH₄H₂PO₄, (NH₄)₂HPO₄ and (NH₄)₃PO₄.

6. The composite coating method for highly compacted high-nickel layered cathode material for solid-state battery according to claim 1, wherein a concentration of phosphate radical in the mixed solution in S1 ranges from 0.05 mol/L to 0.3mol/L, and a concentration of the organic solvent ranges from 5 wt.% to 30 wt.%.

7. The composite coating method for highly compacted high-nickel layered cathode material for solid-state battery according to claim 1, wherein the vanadium compound in S2 comprises at least one of V₂O₅, VO₂, NH₄VO₃ and NaVO₃.

8. The method according to claim 1, wherein a mass ratio of the high-nickel cathode material to the mixed solution in S2 ranges from 0.5 to 2:1.

9. The composite coating method for highly compacted high-nickel layered cathode material for solid-state battery according to claim 1, wherein, in S4, the calcination in an oxygen atmosphere is carried out in a temperature ranging from 400 °C to 700 °C for a time ranging from 3 hours to 8 hours at a heating rate ranging from 1 °C/min to 5 °C/min.
